Europäisches Patentamt

European Patent Office

Office européen des brevets

(11) Veröffentlichungsnummer: **0 206 041 B1**

(12) **EUROPÄISCHE PATENTSCHRIFT**

(45) Veröffentlichungstag der Patentschrift: **20.05.92**

(21) Anmeldenummer: **86107681.8**

(22) Anmeldetag: **05.06.86**

(51) Int. Cl.⁵: **B23H 7/10**

(54) **Verfahren zum wiederholten, automatischen Einziehen der Drahtelektrode einer Drahterosionsmaschine und Vorrichtung zur Durchführung des Verfahrens.**

(30) Priorität: **28.06.85 CH 2762/85**

(43) Veröffentlichungstag der Anmeldung:
**30.12.86 Patentblatt 86/52**

(45) Bekanntmachung des Hinweises auf die
Patenterteilung:
**20.05.92 Patentblatt 92/21**

(84) Benannte Vertragsstaaten:
**DE FR GB IT**

(56) Entgegenhaltungen:
**FR-A- 2 482 498**
**US-A- 4 495 393**

(73) Patentinhaber: **CHARMILLES TECHNOLOGIES S.A.**
**rue du Pré-de-la-Fontaine 8-10**
**CH-1242 Satigny(CH)**

(72) Erfinder: **Josserand, Joseph**
**Route du Suet**
**F-74350 Cruseilles(FR)**

(74) Vertreter: **Blum, Rudolf Emil Ernst et al**
**c/o E. Blum & Co Patentanwälte Vorderberg 11**
**CH-8044 Zürich(CH)**

# Beschreibung

Die Erfindung betrifft eine Verfahren zum wiederholten, automatischen Einziehen der Drahtelektrode einer Drahterosionsmaschine in die eine Arbeitszone begrenzenden, geschlossenen Drahtführungen.

Soll bei der Drahterodierbearbeitung eines Werkstückes der Draht von einem Durchgangsloch des Werkstücks in ein anderes Durchgangsloch eingeführt werden, muss jeweils zunächst der Draht aus der Arbeitszone entfernt und bei neu positioniertem Werkstück wieder eingezogen werden. Da die Drahtelektrode einen Durchmesser oder eine Dicke von z.B. 250 $\mu$m hat, welche nur wenig kleiner ist, als der Innendurchmesser der Führungsöffnungen der geschlossenen Führungen von z.B. 252 $\mu$m, was eine Bedingung für die präzise Drahtpositionierung ist, gestaltet sich das Einziehen schwierig. Dies gilt insbesondere dann, wenn das Einziehen automatisch erfolgen soll. Da sich der Drahtantrieb ausserhalb der Arbeitsköpfe mit den Führungen befindet, muss dabei die Drahtelektrode mit einem freien vorderen Ende beträchtlicher Länge in die Drahtführungen geschoben werden. Bei zu grosser Reibung in den Führungen besteht die Gefahr, dass er gegen seine Eigensteifigkeit gestaucht wird.

Bekannte Lösungen gemäss DE-OS 3 037 505, bei welchen vor jedem Neueinführen in die Arbeitszone eine nadelähnliche Spitze gebildet wird, können deshalb nicht befriedigen.

Erfindungsgemäss werden die genannten Schwierigkeiten dadurch überwunden, dass die Drahtelektrode zufuhrseitig vor der Arbeitszone durch Erwärmung und Dehnung über eine Länge, welche mindestens gleich derjenigen der Arbeitszone plus den Abstand zwischen dieser und einem abfuhrseitigen Drahtantrieb ist, gleichmässig in ihrer Dicke reduziert wird, wobei mit dem dickenreduzierten Drahtstück ein Einziehstück gebildet wird, das hernach durch die Drahtführungen schiebbar ist.

Vorzugsweise erfolgt die Dickenreduktion bei noch eingezogener Drahtelektrode, wobei die Drahtelektrode danach zufuhrseitig im Anfangsbereich des dickenreduzierten Stücks geschnitten und dieses als Einzelstück bereit gehalten wird, während der andere Drahtteil aus der Arbeitszone wegziehbar ist.

Die Längsdehnung bzw. Dickenreduktion erfolgt dabei mit Vorteil so, dass die Drahtelektrode mittels einem vor der Erwärmungszone angeordneten Drahtantrieb festgehalten und mittels einem nach der Erwärmungszone angeordneten, zweiten Drahtantrieb um eine definierte Länge vorgezogen wird.

Die erfindungsgemässe Drahterodiermaschine, welche mit einem drahtzufuhrseitigen Arbeitskopf und einem drahtwegfuhrseitigen Arbeitskopf versehen ist, von denen jeder eine der geschlossenen Drahtführungen enthält und die zwischen sich die Arbeitszone bilden, weist erfindungsgemäss vor dem erstgenannten Arbeitskopf eine Drahterwärmungszone auf, deren Länge diejenige der Arbeitszone plus ihren Abstand von einem abfuhrseitig davon liegenden Drahtantrieb übersteigt. In dieser Erwärmungszone ist vorzugsweise ein die Drahtelektrode umgebender Kanal vorgesehen, um deren gleichmässige Erwärmung sicherzustellen.

Nachfolgend wird anhand der beiliegenden Zeichnungen ein Ausführungsbeispiel der Erfindung näher erläutert. Es zeigen:

Fig. 1 eine schematische Darstellung der hier wesentlichen Teile der Drahterodiermaschine, und

Fig. 2 a. bis f. verschiedene Phasen des Verfahrens in schematischer Darstellung.

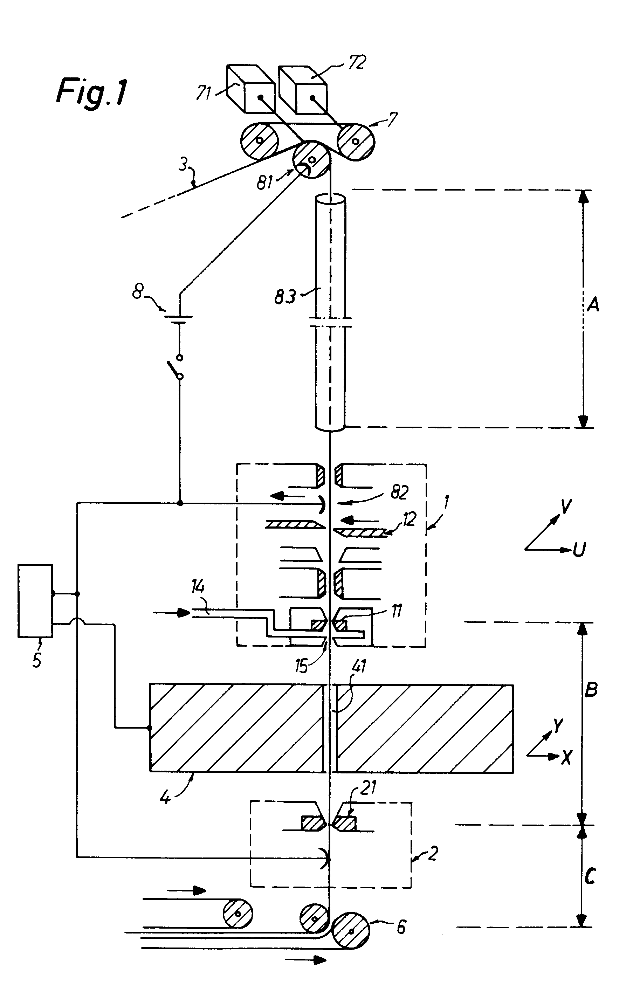

In Fig. 1 sind Arbeitsköpfe 1 und 2 ersichtlich, durch welche eine Drahtelektrode 3 läuft und zwischen denen eine Arbeitszone B gebildet wird, in welcher mittels der Drahtelektrode 3 ein Werkstück 4 elektroerosiv bearbeitet wird. Ein Generator 5 liefert die entsprechenden Spannungsimpulse über Kontakte in den Arbeitsköpfen 1, 2 an die Drahtelektrode 3. Die Arbeitsköpfe 1,2 bestimmen im wesentlichen die Lage der Drahtelektrode in der Arbeitszone B. Während der untere Arbeitskopf 2 fest bleibt, ist der obere Arbeitskopf in einer Horizontalebene U, V positionierbar. Das Werkstück 4 ist unabhängig davon ebenfalls in einer Horizontalebene X, Y verschiebbar. Die Bearbeitungsgenauigkeit hängt wesentlich von der exakt einstellbaren Lage der Drahtelektrode im Arbeitsbereich ab. Zu diesem Zweck sind in den Arbeitsköpfen 1,2 geschlossene Drahtführungen 11,21 vorgesehen, welche oft aus einem durchbohrten, in einer Metallfassung gehaltenem Edelstein bestehen, der sich nur sehr geringfügig abnützt und grosse Ausschläge in x-y Richtung gestattet, ohne dass die schräge Zugrichtung des Drahtes zu einem unzulässigen Präzisionsverlust führt. Um eine möglichst spielfreie Führung zu gewährleisten ist der Durchmesser der Bohrung nur geringfügig grösser als derjenige des Drahtes. Bei Drahtdurchmessern von 250 $\mu$m beträgt der Durchmesser der Bohrung etwa 252-253 $\mu$m. Während der Bearbeitung wird die Drahtelektrode mittels einem Drahtantrieb 6 durch den Arbeitsbereich gezogen. Eingangsseitig wird die Drahtelektrode in einem weiteren Drahtantrieb 7 gebremst, wozu dieser eine Bremse 71 aufweist. Damit wird die nötige mechanische Drahtspannung im Arbeitsbereich gewährleistet.

Verlangt die Bearbeitung eines Werkstückes, dass die Drahtelektrode 3 in einen neuen Durchgang 41 im Werkstück 4 eingeführt wird, so ist hierfür die Drahtelektrode zunächst aus der Arbeitszone B zu entfernen und hernach in den neuen Durchgang bzw. die Drahtführungen wieder einzuziehen. Die Entfernung des Drahtes aus der Arbeitszone B erfolgt dadurch, dass er mittels einer Schneideinrichtung 12 im oberen Arbeitskopf 1 getrennt wird, wonach der untere Teil des Drahtes mittels des Drahtantriebes 6 weggezogen wird. Beim Wiedereinführen des Drahtes wird das verbleibende obere Stück mittels eines Einziehmotors 72 des oberen Antriebs 7 durch die Drahtführungen 11,21 sowie den neuen Durchgang im Werkstück gestossen.

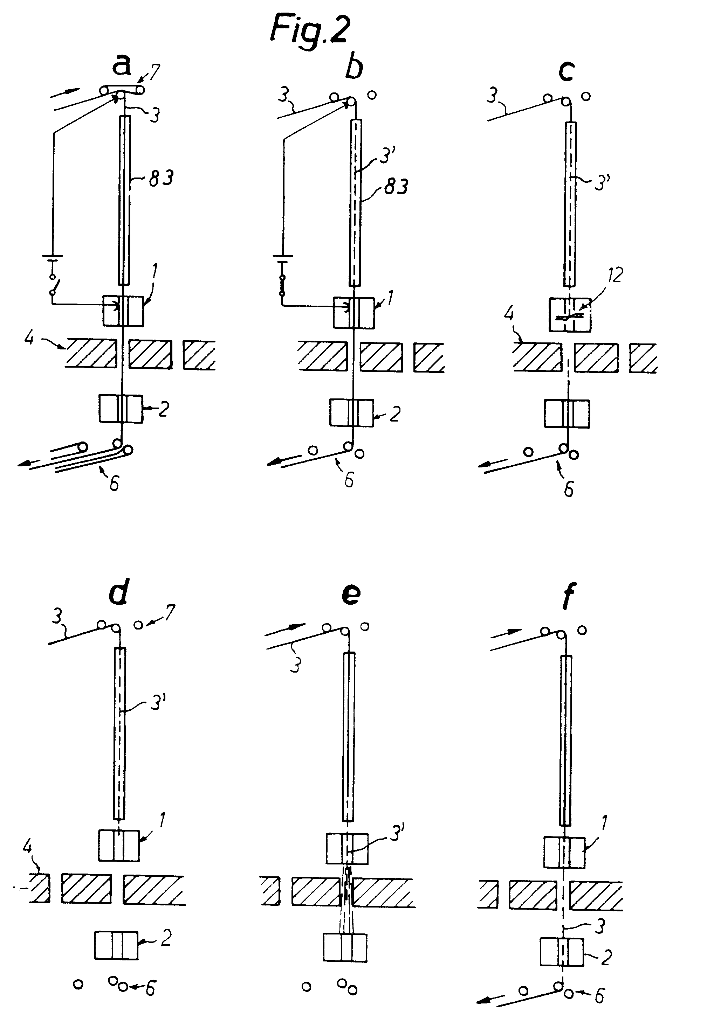

Um dieses Wiedereinführen zu ermöglichen, wird vor dem Durchtrennen des Drahtes an ihm ein Einziehstück 3' (Fig. 2) gebildet, das eine reduzierte Dicke aufweist. Hierzu ist eine Drahterwärmungseinheit vorgesehen, welche sich im wesentlichen zwischen zwei Kontakten 81,82 erstreckt, über welche die Heizspannung einer Spannungsquelle 8 an den Draht angelegt wird. In dieser Drahterwärmungseinheit verläuft der Draht 3 innerhalb eines Kanals, der durch ein gerades Rohrstück 83 gebildet wird, das eine ungleiche Erwärmung des Drahts infolge Konvektionseffekten bzw. lokalen Luftströmungen vermeidet. Der Draht 3 wird darin zu Rotglut erhitzt, wonach er mit dem Antrieb 6 um eine bestimmte Strecke gedehnt wird, während er mittels der Bremse 71 des oberen Antriebs 7 gehalten ist, wie in Figur 2b angedeutet ist. Der entsprechende Drahtvorschub bestimmt die Dickenreduktion. In einem Ausführungsbeispiel ist die Drahterwärmungseinheit 500 mm lang und der Vorschub beträgt 120 mm, was zu einer Dickenreduktion von 250 $\mu$m auf ca. 220 $\mu$m führt. Die Ausdehnung der Erwärmungszone A übersteigt diejenige der Arbeitszone B, was sicherstellt, dass das Einziehstück länger ist, als der gegenseitige Abstand der Drahtführungen 11,21, in welchees einzuziehen ist. Ist das Einziehstück 3' des Drahts gebildet, so erfolgt die Trennung der Drahtelektrode im Anfangsbereich dieses Einziehstücks (Fig.2 c), während der abgetrennte Teil mittels dem Antrieb 6 aus dem Werkstück 4 herausgezogen werden kann. Nachdem das Werkstück 4 neu positioniert worden ist, steht die Maschine für das Wiedereinziehen des Drahtes zur Verfügung (Fig. 2 d). Dies erfolgt zunächst durch den Vorschub des Einziehstücks 3' des Drahts mittels dem Einziehmotor 72 des Antriebs 7. Hat dessen Spitze die erste Drahtführung 11 passiert, so wird im oberen Arbeitskopf 1 in einer Düse 15, welche über eine Zufuhrleitung 14 gespeist wird (schematisch) ein gerichteter Flüssigkeitsstrahl erzeugt, in welchem die spitze des Einziehstücks 3' des Drahts zur unteren Drahtführung 21 geführt wird (Fig. 2 e). Bei der unteren Drahtführung 21 ist eine Ansaugvorrichtung vorgesehen (nicht dargestellt), welche mithilft, die spitze des Einziehstücks 3' durch diese Drahtführung einzuziehen. Schliesslich wird der Draht vom unteren Antrieb 6 erfasst (Fig. 2 f) und eingezogen, womit ein neuer Bearbeitungsschritt erfolgen kann.

Mit der beschriebenen Anordnung und dem erläuterten Vorgehen gelingt es, einen automatischen Einzug auch bei geschlossenen Drahtführungen mit nur wenig Spiel mit hoher Funktionssicherheit zu bewerkstelligen.

**Patentansprüche**

1. Drahterodiermaschine mit einer Vorrichtung zum wiederholten, automatischen Einziehen der Drahtelektrode (3) in geschlossene, eine Arbeitszone (B) begrenzende Drahtführungen (11,21), gekennzeichnet durch
   a) einen oberen Drahtantrieb (7,71,72), der entweder zum Vorschieben oder zum Bremsen der Drahtelektrode (3) eingerichtet ist,
   b) eine zwischen diesem oberen Antrieb (7,71, 72) und dem Eintritt der Arbeitszone (B) angeordnete Erwärmungseinheit (A), die zwei Kontakte (81,82) aufweist, über welche die Heizspannung einer Quelle (8) an einen gewissen Abschnitt der Drahtelektrode (3) angelegt wird, wobei dessen Länge mindestens gleich derjenigen der Arbeitszone (B) plus den Abstand (C) zwischen dieser und einem abfuhrseitigen, unteren Drahtantrieb (6) ist, und
   c) eine vor der oberen Drahtführung (11) angeordnete Schneideinrichtung (12), wobei der obere Drahtantrieb (7,71,72) so gesteuert ist, dass er die Drahtelektrode (3), während ihrer Erwärmung, Dehnung, und ihrem Schneiden im Anfangsbereich des Einziehstückes (3'), mittels einer Bremse (71) anhält und nach der Trennung das Einziehstück (3') mittels eines Einziehmotors (72) stösst.

2. Drahterodiermaschine nach Anspruch 1, dadurch gekennzeichnet, dass in der Erwärmungseinheit (A) ein Rohrstück (83) die Drahtelektrode (3) umgibt, um deren gleichmässige Erwärmung sicherzustellen.

3. Drahterodiermaschine nach Anspruch 1, dadurch gekennzeichnet, dass die Erwärmungseinheit (A) unmittelbar vor dem drahtzufuhrseitigen, die obere Drahtführung (11) enthaltenden Arbeitskopf (1) angeordnet ist.

4. Drahterodiermaschine nach Anspruch 1, dadurch gekennzeichnet, dass die Bremse (71) eingerichtet ist, um die Drahtelektrode (3) während ihrer Dickenreduktion festzuhalten.

5. Drahterodiermaschine nach Anspruch 1, dadurch gekennzeichnet, dass die Schneideinrichtung (12) zum gratfreien Durchtrennen der Drahtelektrode (3) eingerichtet ist.

6. Drahterodiermaschine nach Anspruch 1, dadurch gekennzeichnet, dass nach der oberen Drahtführung (11) eine Vorrichtung (14,15) zum Erzeugen eines von der entsprechenden Drahtführung (11) in Richtung der gegenüberliegenden Drahtführung (21) gerichteten Flüssigkeitsstrahls vorgesehen ist.

7. Drahterodiermaschine nach Anspruch 1, dadurch gekennzeichnet, dass bei der unteren Drahtführung (21) eine Ansaugvorrichtung angeordnet ist, die eingerichtet ist, um das Einziehen der Spitze des Einziehstückes (3') durch diese Drahtführung (21) zu unterstützen, bis diese Spitze vom unteren Antrieb (6) erfasst wird.

8. Verfahren zum wiederholten, automatischen Einziehen einer Drahtelektrode in geschlossene, eine Arbeitszone (B) begrenzende Drahtführungen (11,21) einer Drahterosionsmaschine, dadurch gekennzeichnet, dass die in diese Drahtführungen (11,21) einzufädelnde Drahtelektrode (3) durch Erwärmung und Dehnung über eine gewisse Länge gleichmässig in ihrer Dicke reduziert wird, wobei diese Länge mindestens gleich derjenigen der Arbeitszone (B) plus dem Abstand (C) zwischen dieser und einem abfuhrseitigen Drahtantrieb (6) ist, so dass ein dickenreduziertes Einziehstück (3') gebildet wird, indem

   a) die noch eingezogene Drahtelektrode (3) vor der Arbeitszone (B) über diese gewisse Länge erwärmt und zufuhrseitig davon gebremst wird, während sie von dem abfuhrseitigen Drahtantrieb (6) weiter gezogen wird,

   b) die Drahtelektrode vor der Arbeitszone (B) im Anfangsbereich des dickenreduzierten Einziehstücks (3') geschnitten wird, wobei der abfuhrseitige, nicht dickenreduzierte Drahtteil mittels des Drahtantriebs (6) weggezogen wird, und

   c) das verbleibende Einziehstück (3') durch die Drahtführungen (11,21) und den Durchgang (41) im Werkstück (4) gestossen wird.

9. Verfahren nach Anspruch 8, dadurch gekennzeichnet, dass das Einziehen des Einziehstücks (3') durch den Durchgang (41) und die untere Drahtführung (21) unter Zuhilfenahme eines im Eingangsbereich der Arbeitszone (B) erzeugten, entsprechend gerichteten Flüssigkeitsstrahls erfolgt.

**Claims**

1. A travelling wire EDM apparatus with a device for repeatedly and automatically thread the wire electrode (3) into closed wire guides (11, 21) which delimit a working zone (B), characterized in that it comprises

   a) upper wire feeding means (7, 71, 72) able to advance or to brake the wire electrode (3),

   b) a heating unit (A) located between said upper wire feeding means (7, 71, 72) and the entrance to the working zone (B), and comprising two contacts (81, 82) through which the heating voltage of a source (8) is applied to a certain section of the wire electrode (3), the length of which is at least equal to that of the working zone (B) plus the distance (C) between the same and a lower wire feeder (6) located on the output side, and

   c) a cutting device (12) placed upstream of the upper wire guide (11), the upper wire feeding means (7, 71, 72) being commanded to stop the wire electrode (3) by means of a brake (71) whilst it is heated, stretched, and cut at the forward part of the threading section (3'), and to push the threading section (3') through the action of a threading motor (72) after the cutting.

2. A travelling wire EDM apparatus according to claim 1, characterized in that a tube (83) encloses the wire electrode (3) inside the heating unit (A), in order to ensure a homogeneous heating of the wire.

3. A travelling wire EDM apparatus according to claim 1, characterized in that the heating unit (A) is placed immediately in front of the upstream working head (1) which contains the upper wire guide (11).

4. A travelling wire EDM apparatus according to claim 1, characterized in that the brake (71) is adapted to immobilize the wire electrode (3) during its reduction in thickness.

5. A travelling wire EDM apparatus according to claim 1, characterized in that the cutting device (12) is adapted to cut the wire electrode (3) without producing burrs.

6. A travelling wire EDM apparatus according to claim 1, characterized in that there is provided a device (14, 15) placed after the upper wire guide (11) for generating a jet of liquid directed from said wire guide (11) towards the wire guide (21) facing it.

7. A travelling wire EDM apparatus according to claim 1, characterized by a suction unit placed near the lower wire guide (21) and able to assist threading the point of the threading section (3') through this guide (21) until said point is gripped by the lower wire feeder (6).

8. Method for automatically and repeatedly threading a wire electrode into closed wire guides (11, 21) which limit a working zone (B) of a travelling wire EDM apparatus, characterized in that one homogeneously reduces the thickness of the wire electrode (3) which is to be threaded into said wire guides (11, 21) over a certain length by heating and stretching it where this length is at least equal to that of the working zone (B) plus the distance (C) between the same and a downstream wire feeder (6), thus shaping a threading section (3') of reduced thickness, where this is achieved by

a) heating the still threaded wire (3) upstream of the working zone (B) over a certain length, and braking it on the input side therefrom whilst it is still being pulled by the wire feeder (6) situated on the output side,

b) cutting the wire electrode upstream of the working zone (B) at the forward part of the threading section (3') of reduced thickness, the downstream portion of the wire which is not reduced in thickness being pulled away through the wire feeder (6), and

c) pushing the remaining threading section (3') through the wire guides (11, 21) and the passage (41) in the workpiece (4).

9. Method according to claim 8, characterized in that threading the threading section (3') through the passage (41) and through the lower wire feeder (21) is performed with the aid of a liquid jet generated at the entrance portion of the working zone (B) and oriented accordingly.

**Revendications**

1. Machine à étincelage par fil, avec un dispositif pour enfiler automatiquement à plusieurs reprises le fil-électrode (3) dans des guides-fil fermés (11, 21) délimitant une zone de travail (a), caractérisée par

a) une unité supérieure d'entraînement (7,71,72) agencée pour l'avance ou le freinage du fil-électrode (3),

b) une unité de chauffage (A) située entre ladite unité supérieure d'entraînement (7, 71, 72) et l'entrée de la zone de travail (B) et comportant deux contacts (81, 82) par l'intermédiaire desquels la tension de chauffage d'une source (8) est appliquée à un certain segment du fil-électrode (3) dont la longueur est au moins égale à celle de la zone de travail (B) plus la distance (C) entre celle-ci et une unité inférieure d'entraînement (6) du fil située en aval, et

c) un dispositif de sectionnement (12) situé en amont du guide-fil amont (11), l'unité d'entraînement supérieure (7, 71, 72) étant commandée de manière à arrêter le fil-électrode (3) au moyen d'un frein (71) pendant son échauffement, son allongement et son sectionnement à la partie antérieure de la section à enfiler (3'), et de manière à pousser celle-ci au moyen d'un moteur à enfiler (72) après le sectionnement.

2. Machine à étincelage par fil selon la revendication 1, caractérisée en ce qu'un tube (83) entoure le fil-électrode (3) dans l'unité de chauffage (A), pour assurer un chauffage uniforme du fil.

3. Machine à étincelage par fil selon la revendication 1, caractérisée en ce que l'unité de chauffage (A) est située immédiatement avant la tête de travail amont (1) contenant le guide-fil supérieur (11).

4. Machine à étincelage par fil selon la revendication 1, caractérisée en ce que le frein (71) est agencé pour maintenir le fil-électrode (3) durant son amincissement.

5. Machine à étincelage par fil selon la revendication 1, caractérisée en ce que le dispositif de sectionnement (12) est agencé pour sectionner le fil-électrode (3) sans produire de bavures.

6. Machine à étincelage par fil selon la revendication 1, caractérisée en ce qu'un dispositif (14, 15) pour produire un jet de liquide dirigé du guide-fil (11) correspondant vers le guide-fil opposé (21) est disposé en aval du guide-fil supérieur (11).

7. Machine à étincelage par fil selon la revendication 1, caractérisée en ce qu'un dispositif d'aspiration est placé à proximité du guide-fil inférieur (21) et agencé pour collaborer à l'enfilement de la pointe de la section à enfiler (3') dans ce guide-fil (21) jusqu'à ce que cette pointe soit saisie par l'unité d'entraînement inférieure (6).

8. Procédé pour enfiler automatiquement à plusieurs reprises un fil-électrode dans des guides-fil fermés (11, 21) délimitant une zone de travail (B) d'une machine à étincelage par fil, caractérisé en ce qu'on amincit de façon homogène sur une certaine longueur, par chauffage et allongement, le fil-électrode (3) à enfiler dans ces guides-fil (11, 21), cette longueur étant au moins égale à celle de la zone de travail (B) plus la distance (C) entre celle-ci et un dispositif d'entraînement (6) du fil situé du côté aval, de manière à former une section (3') d'enfilage d'épaisseur réduite, ceci étant réalisé

a) par chauffage sur une certaine longueur en amont de la zone de travail (B) du fil-électrode (3) encore enfilé et freiné en amont de cette longueur tout en étant toujours tiré par l'unité d'entraînement inférieure(6),
b) par sectionnement du fil-électrode en amont de la zone de travail (B) dans la partie antérieure de la section d'enfilage (3') d'épaisseur réduite, la portion aval d'épaisseur non réduite du fil étant extraite au moyen de l'unité d'entraînement (6), et
c) par poussée de la section d'enfilage (3') restante à travers les guides-fil (11, 21) et le passage (41) dans la pièce à usiner (4).

9. Procédé selon la revendication 8, caractérisé en ce que l'enfilage de la section d'enfilage (3') à travers le passage (41) et le guide-fil inférieur (21) est effectué avec l'aide d'un jet de liquide généré dans la région d'entrée de la zone de travail (B) et orienté de façon appropriée.

Fig.1

# Fig.2